# DEMANDE DE BREVET EUROPEEN

(11) **EP 1 655 658 A1**
(43) Date de publication de la demande: **10.05.2006**
(21) Numéro de dépôt: 05292281.2
(22) Date de dépôt: 27.10.2005
(51) Int. Cl.: G06F 3/033, G06Q 10/00

(54) **Système de prise de rendez-vous et procédé de consultation de prise de rendez-vous, à agenda hybride papier/électronique**

(30) Priorité: 05.11.2004 FR 0411813
(71) Demandeur: France Telecom S.A., 75015 Paris (FR)
(72) Inventeur: Herledan, Frédéric, 38240 Meylan (FR)
(74) Mandataire: Hassine, Albert

(57) **Abrégé**

L'invention concerne l'aide à la prise de rendez-vous par des entités clientes auprès d'une entité fournisseur, ainsi que la consultation par l'entité fournisseur des rendez-vous déjà pris par des entités clientes. Selon l'invention, on conserve l'usage d'un agenda papier (12) et d'un stylographe (13), lesquels comportent toutefois, conjointement, des moyens de reconnaissance de chaque plage horaire de l'agenda. On prévoit aussi un serveur (10) de gestion des rendez-vous stockant les plages horaires déjà réservées. Ce serveur communique avec les moyens de reconnaissance pour leur indiquer si une plage reconnue est libre ou déjà réservée.

## Description

La présente invention concerne l'aide à la prise de rendez-vous par des entités clientes auprès d'une entité fournisseur, ainsi que la consultation par l'entité fournisseur des rendez-vous déjà pris par des entités clientes.

Dans le document EP-1457912, la Demanderesse a proposé un système de lecture/enregistrement de données, notamment de données de prise de rendez-vous, par communication via un réseau. Le système comprend un serveur distant, des postes clients et un poste fournisseur, tous munis de moyens de communication avec le serveur via le réseau précité. En particulier, le serveur décrit dans ce document comporte une mémoire pour stocker un agenda électronique très avantageusement sous la forme d'un fichier partagé comprenant des données d'accès sécurisé, typiquement des données de plages horaires d'agenda. L'accès sécurisé est régi par une liste hiérarchisée de droits d'accès, chacun en correspondance d'un identifiant de poste client. Ainsi, le poste fournisseur peut lire et modifier le fichier partagé. En revanche, chaque poste client peut lire ce fichier mais ne peut modifier qu'une partie des données.

Récemment, cette solution a été proposée notamment aux professionnels de santé, en tant qu'entités fournisseurs, dans le cadre de la prise de rendez-vous automatique, en ligne, par des patients, en tant qu'entités clientes. Une grande partie des professionnels de santé a marqué son intérêt pour cette technique. D'autres professionnels ont apprécié la liberté laissée aux patients pour prendre les rendez-vous, eux-mêmes, en ligne. Toutefois, certains préféraient encore noter directement leurs futurs rendez-vous sur un agenda papier, notamment pendant les consultations. Il est advenu alors un chevauchement conflictuel des rendez-vous pris, d'une part, sur l'agenda papier et, d'autre part, par les patients en ligne.

La présente invention vient améliorer la situation.

Selon une approche de l'invention, on prévoit une solution impliquant un agenda hybride, papier/électronique.

A cet effet, la présente invention vise tout d'abord un système de prise de rendez-vous destiné à une entité fournisseur, comprenant :
- un agenda papier, à disposition de l'entité fournisseur, comportant un calendrier découpé en une pluralité de plages horaires,
- un stylographe, à disposition de l'entité fournisseur, agencé pour coopérer avec l'agenda papier et mettant en oeuvre, avec l'agenda, des moyens de reconnaissance de chaque plage horaire de l'agenda.

Le système au sens de l'invention comporte en outre un serveur de gestion des rendez-vous de l'entité fournisseur, équipé d'une mémoire pour enregistrer des réservations de plages horaires effectuées par des entités clientes distantes.

Les moyens de reconnaissance précités sont alors agencés pour communiquer avec le serveur et :
- par action du stylographe sur une plage horaire sélectionnée par l'entité fournisseur, reconnaître la plage horaire sélectionnée,
- communiquer au serveur un identifiant associé à la plage horaire reconnue, et
- recevoir du serveur une information relative à un état libre ou réservé de la plage identifiée.

La présente invention vise aussi un procédé pour consulter les prises de rendez-vous effectuées par des entités clientes distantes, à partir d'un agenda papier et d'un stylographe mettant en oeuvre, comme indiqué ci-avant, des moyens de reconnaissance de chaque plage horaire de l'agenda. On applique alors la pointe du stylographe sur une plage horaire sélectionnée de l'agenda papier et les moyens de reconnaissance sont ainsi rendus actifs pour :
- reconnaître la plage horaire sélectionnée,
- établir une communication avec le serveur de gestion des rendez-vous précité,
- communiquer au serveur l'identifiant associé à la plage horaire reconnue, et
- recevoir du serveur l'information relative à un état libre ou réservé de la plage identifiée.

Le cas échéant, le procédé peut se poursuivre par une signalisation à l'entité fournisseur de l'état réservé de la plage horaire sélectionnée.

Ainsi, l'entité fournisseur, par exemple un professionnel de santé pendant une consultation, peut souhaiter fixer un rendez-vous dans une plage horaire choisie. Il sélectionne cette plage horaire simplement en appliquant la pointe du stylographe, dans son agenda papier, contre cette plage horaire. Si cette plage a déjà été réservée, l'information correspondante issue du serveur peut lui être signalée, de sorte que le professionnel de santé peut choisir ensuite une autre plage horaire, en empêchant ainsi tout risque de chevauchement avec des réservations effectuées au préalable par des patients, notamment en ligne.

On comprendra que le serveur du système précité est un moyen important pour mettre en oeuvre la présente invention. A ce titre, l'invention vise aussi un serveur de gestion des rendez-vous d'une entité fournisseur, ce serveur étant apte à communiquer avec un stylographe, à disposition de l'entité fournisseur, conçu pour coopérer avec un agenda papier comportant une pluralité de plages horaires et pour mettre en oeuvre des moyens de reconnaissance d'au moins une plage horaire de l'agenda.

Le serveur au sens de l'invention est équipé d'une mémoire pour enregistrer des réservations de plages horaires effectuées par des entités clientes distantes, et il est apte à :
- recevoir du stylographe, suite à l'action du stylographe sur une plage horaire sélectionnée par l'entité fournisseur, un identifiant associé à la plage horaire reconnue, et
- mettre en oeuvre un dialogue avec ledit stylographe en vue de la réservation de la plage horaire sélectionnée, dialogue pendant lequel il envoie au stylographe une information relative à un état libre ou réservé de la plage identifiée.

On comprendra aussi que l'ensemble comportant l'agenda papier et le stylographe, et incluant en particulier les moyens de reconnaissance précités constitue un moyen important pour la mise en oeuvre de l'invention. A cet effet, la présente invention vise aussi un tel ensemble, comportant donc un agenda papier et un stylographe, ainsi que des moyens de reconnaissance de chaque plage horaire de l'agenda, actifs au moins par application du stylographe sur une plage horaire sélectionnée de l'agenda, pour reconnaître la plage horaire sélectionnée et former un signal de communication d'un identifiant unique associé à la plage horaire reconnue, ce signal étant destiné au serveur précité.

Des exemples de réalisation de ces moyens de reconnaissance seront donnés dans la description détaillée ci-après en référence aux dessins.

D'ailleurs, d'autres caractéristiques et avantages de l'invention apparaîtront à l'examen de la description détaillée ci-après, et des dessins annexés sur lesquels :
- la figure 1 illustre schématiquement un système au sens de la présente invention,
- les figures 2A et 2B représentent une configuration de l'agenda selon deux modes de réalisation respectifs, et
- la figure 3 illustre schématiquement les étapes d'un procédé au sens de l'invention.

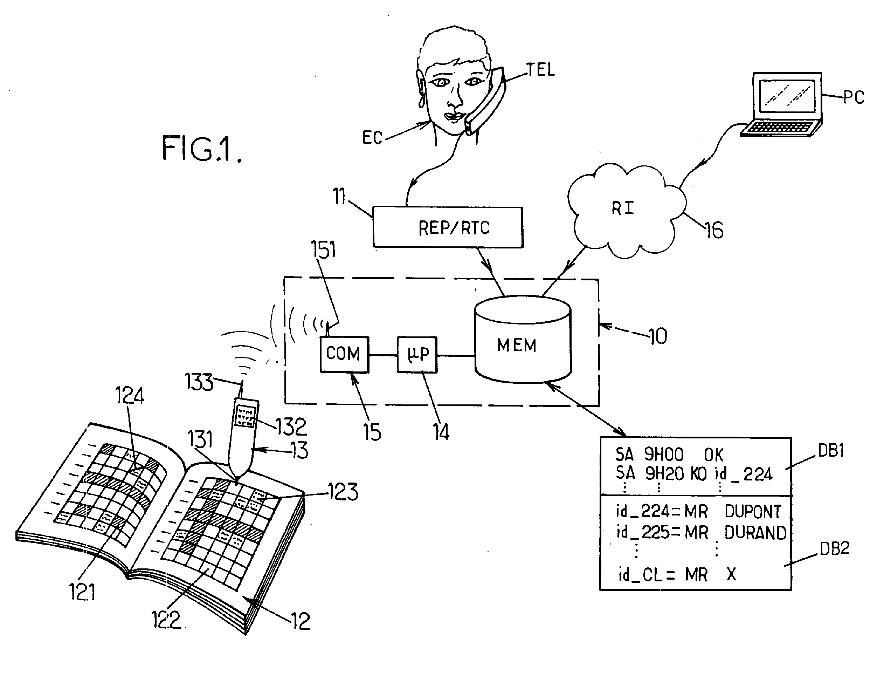

On se réfère tout d'abord à la figure 1 représentant un système de prise de rendez-vous et de consultation de prise de rendez-vous. Le système comporte un serveur 10 comprenant préférentiellement :
- une mémoire MEM, stockant notamment des bases de données de rendez-vous DB1 et de carnet d'adresses DB2,
- des moyens de communication, via un réseau étendu (par exemple l'Internet) 16, avec des postes distants PC d'entités clientes,
- une liaison via le réseau commuté, pour des prises de rendez-vous à l'aide d'un répondeur intelligent 11, lequel est capable d'interpréter, par exemple par reconnaissance vocale ou de fréquence tonale (DTMF), les horaires de réservation souhaités que prononce une entité cliente EC, dans son téléphone TEL (fixe, directement relié au réseau commuté, ou, en variante, mobile et relié à un réseau cellulaire),
- une interface de communication 15, de préférence radiofréquence (au protocole *bluetooth* par exemple), vers une antenne 151 agencée pour communiquer avec un stylographe 13 du système au sens de l'invention,
- un processeur 14, notamment pour gérer les interfaces de communication vers les différents moyens de communication précités (11, 16, 15), et pour gérer le stockage d'informations reçues dans la mémoire MEM et la transmission de données, notamment vers un stylographe 13 décrit ci-après.

De son côté, l'entité fournisseur dispose d'un agenda papier 12 comportant des plages horaires journalières sur plusieurs jours de l'année qui peuvent être :
- une plage non accessible (plage 121), correspondant par exemple à une plage d'indisponibilité quotidienne ou hebdomadaire de l'entité fournisseur ;
- une plage libre (plage 122) que l'entité fournisseur peut décider de réserver ; et
- une plage déjà réservée (plage 123) qui peut correspondre notamment à une plage horaire que l'entité fournisseur a elle-même réservée, par écriture à l'aide de son stylographe 13.

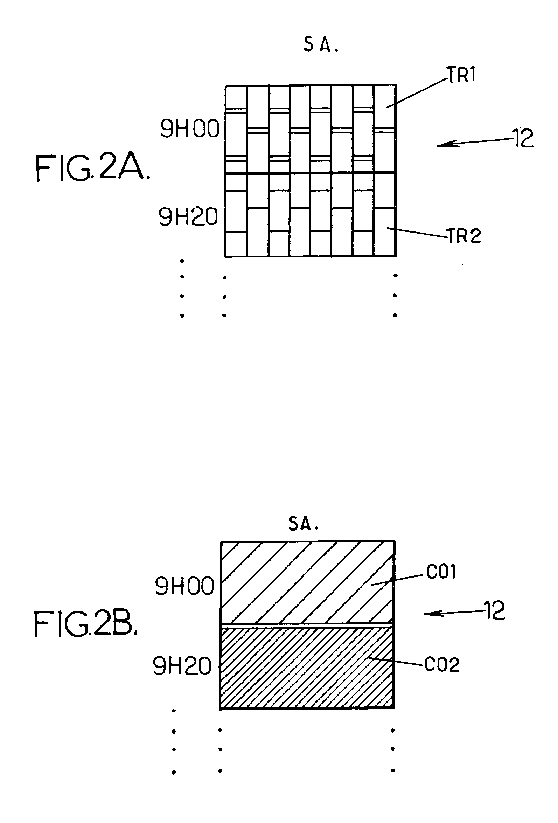

Le stylographe 13 comporte, à cet effet, une pointe 131 pour :
- écrire (par roulement à billes, par application d'un feutre, ou autre) les réservations dans les plages horaires libres 122, et
- reconnaître, par exemple à l'aide de moyens de lecture optique, une plage horaire quelconque de l'agenda 12 comme on le verra en référence aux figures 2A, 2B et 2C.

Le stylographe 13 est apte à communiquer avec le serveur 10 par des moyens radiofréquences (dont l'antenne 133 prévue à cet effet) et comporte en outre des moyens d'affichage 132 d'informations telles que :
- l'état d'une plage horaire : libre ou déjà réservée ; et
- les références de l'entité cliente EC qui aurait déjà réservé une plage horaire consultée.

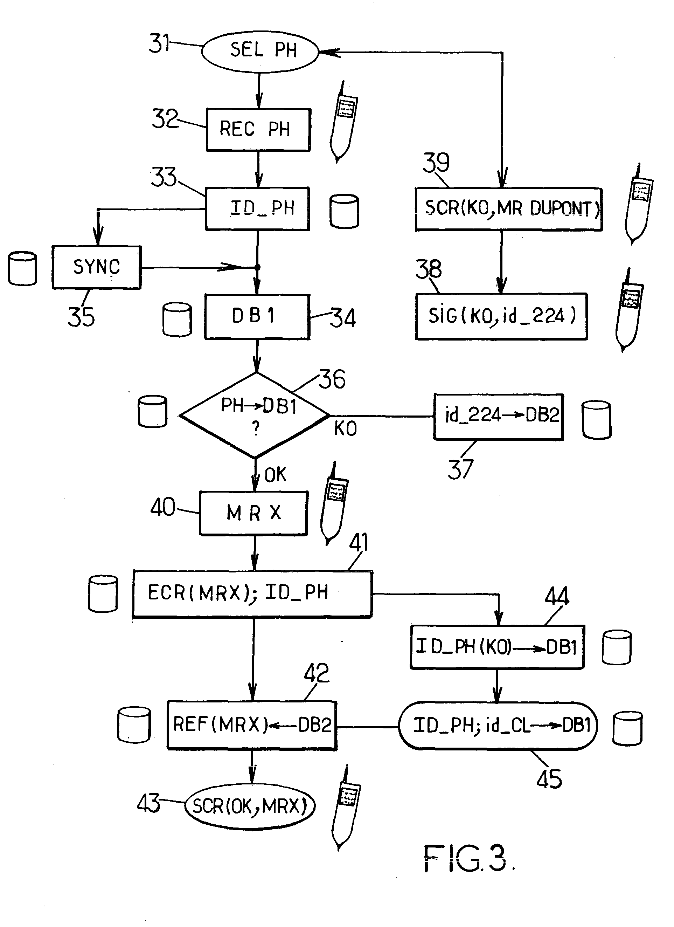

A cet effet, lorsque l'entité fournisseur souhaite écrire une réservation dans une plage horaire déjà réservée par une entité cliente, via les moyens de communication 16 et 11, la pointe 131 reconnaît par lecteur optique cette plage horaire et communique une requête au serveur 10 de réservation. Le serveur consulte la base de données des rendez-vous DB1, constate que cette plage horaire est déjà réservée et transmet au stylographe 13 ces informations, avec préférentiellement les références de l'entité cliente qui a déjà réservé au préalable cette plage horaire. Ces étapes seront décrites plus en détail en référence à la figure 3. On indique simplement ici qu'en variante de prévoir une base de données du carnet des références DB2, stockée auprès du serveur 10, on peut prévoir plutôt une base de données équivalente, stockée auprès du stylographe 13, dans une mémoire prévue à cet effet. Cette mesure peut s'avérer avantageuse si l'on souhaite minimiser la quantité d'informations à communiquer par la liaison radiofréquence via les antennes 133 et 151. Par ailleurs, le professionnel de santé dispose ainsi d'un carnet d'adresses "*électronique*" qu'il peut consulter ou mettre à jour de façon autonome sans alourdir les communications avec le serveur.

Ainsi, dans cette variante avantageuse :
- le serveur 10 stocke, en correspondance de l'état réservé d'une plage horaire par une entité cliente, un identifiant id_CL de cette entité cliente,
- le serveur 10 communique l'identifiant de l'entité cliente avec l'information relative à l'état réservé de la plage horaire,
- et le stylographe 13 (et/ou l'agenda papier 12 lui-même) peuvent comporter une mémoire stockant la base de données DB2 comportant des références d'entités clientes en correspondance de leurs identifiants respectifs.

On se réfère donc maintenant à la figure 3 pour décrire plus en détail le procédé de consultation de prise de rendez-vous, par l'entité fournisseur qui peut être, dans l'exemple décrit, un professionnel de santé consultant ses rendez-vous pris notamment en ligne par ses patients.

Lorsque le professionnel de santé souhaite inscrire manuellement un rendez-vous, par exemple en cours de consultation, il sélectionne à l'étape 31 une plage horaire qu'il choisit par exemple avec son patient pendant la consultation. Les moyens de reconnaissance 131 reconnaissent, à l'étape 32, cette plage horaire choisie PH et communiquent au serveur 10, à l'étape 33, un identifiant de la plage horaire ID_PH. Dès réception de cet identifiant, le serveur :
- d'une part, enclenche un mécanisme de synchronisation à l'étape 35 pour bloquer toute prise de rendez-vous extérieure (par les moyens de communication 11 et 16 précités), pendant le déroulement des étapes du procédé de la figure 3 ; et
- d'autre part, consulte la base de données des rendez-vous DB1, à l'étape 34.

Le mécanisme dit "*de synchronisation*" (étape 35) peut être décrit comme suit:
- le stylographe 13, en mode écriture, reconnaît une plage de l'agenda papier et transmet une requête de pré-réservation de plage au serveur 10,
- la durée de la pré-réservation est prédéterminée (par exemple de 10 secondes),
- pendant cette durée, le serveur bloque toute autre requête de réservation par des entités clientes,
- si la réservation a été finalement validée par le stylographe dans ce délai, la réservation est effective auprès du serveur. Sinon, la plage redevient à nouveau disponible pour des entités clientes notamment.

On comprendra ainsi, en termes plus génériques, que le serveur est apte à bloquer les réservations en provenance des entités clientes distantes suite à la réception dudit identifiant et pendant le déroulement du dialogue précité entre le serveur et le stylographe.

La base de données des rendez-vous DB1 comporte préférentiellement les données de plages horaires telles que la date du jour, le début de la plage horaire (par exemple 9h, 9h20, etc.), ainsi que l'état libre ("ok") ou occupée (déjà réservée "ko"). Avantageusement, la base de données DB1 comporte en outre, dans l'état déjà réservé, un identifiant ID_CL de l'entité cliente qui a effectué cette réservation, ce qui permet de retrouver les références de cette entité cliente dans la seconde base de données DB2.

Le serveur 10, dès réception de l'identifiant de plage horaire choisie à l'étape 33, recherche dans la base de données DB1 l'état libre ou occupé de cette plage horaire (étape 34).

Si la plage horaire PH est libre, le serveur 10 envoie aux moyens de reconnaissance du stylographe 13 un message d'accord pour une réservation possible (flèche "ok" du test 36). Le professionnel de santé peut alors réserver sur son agenda 12 la plage horaire PH et écrire le nom de son patient (par exemple *"MR X"*) à l'étape 40. Avantageusement, les moyens de reconnaissance sont agencés pour reconnaître les caractères écrits, par exemple pendant l'écriture même, par reconnaissance de déplacement de la pointe 131 sur l'espace réservé à la plage horaire PH de l'agenda 12. Ainsi, à l'étape 41, le stylographe 13 communique au serveur 10 l'identifiant de la plage horaire réservée, ainsi que le nom écrit du patient ("*MR X*") qui vient de réserver cette plage horaire. Le serveur mémorise la plage horaire PH, en tant que plage horaire réservée, dans la première base de données des rendez-vous DB1 (étape 44).

Selon une option préférentielle, le nom écrit et reconnu du patient ("*MR X*") peut former un mot-clé permettant de retrouver dans la base de données DB2 des patients, toutes les références du patient qui vient de réserver la plage horaire PH (étape 42) si ce patient a déjà été répertorié dans cette base DB2 au préalable. Cette mesure permet avantageusement de communiquer ensuite un message de validation de réservation de plage horaire, avec les références du patient "*MR X*" et l'indication de la plage horaire sélectionnée s'affichant sur l'écran 132 du stylographe 13 (étape 43). En consultant cet écran 132, le professionnel de santé peut alors s'apercevoir qu'il a bien réservé, de façon valide, la plage horaire qu'il a choisie. En outre, l'identifiant id_CL du patient *"MR X"* peut aussi être retrouvé dans la base des patients DB2 et être associé à l'identifiant ID_PH de la plage horaire réservée dans la base de données des rendez-vous DB1 (étape 45).

De façon générale, on comprendra que le système au sens de l'invention peut comporter un module de reconnaissance de caractères écrits, logiciel et/ou matériel. Ainsi, les moyens de reconnaissance peuvent communiquer au serveur 10 des données d'informations écrites en correspondance d'une plage horaire sélectionnée, telles que le nom du patient pour lequel la plage sélectionnée est réservée. Le serveur 10 peut ensuite :
- faire passer la plage horaire sélectionnée d'un état libre à un état réservé, dans la mémoire MEM (étape 44), sur réception des données d'informations écrites,
- et enregistrer un identifiant id_CL de ces données d'informations écrites dans la mémoire MEM, en correspondance de la plage horaire ID_PH enregistrée à l'état réservé, dans la base de données des rendez-vous DB1 (étape 45).

Selon un autre avantage, le module de reconnaissance de caractères écrits, précité, peut aussi reconnaître le tracé d'un trait continu, par exemple sensiblement oblique, dans une plage horaire 124 (figure 1) de l'agenda papier, en tant qu'annulation de réservation d'une plage horaire. Le serveur 10, dans ce cas, peut faire passer cette plage horaire 124 d'un état précédent "*réservée*" à un état courant "*libre*"*.*

On indique qu'un autre mode de réalisation possible de la prise de rendez-vous directe par le professionnel de santé consiste à :
- sélectionner une plage de l'agenda,
- sélectionner dans le carnet d'adresses électronique, l'identifiant du patient souhaitant une réservation de cette plage, et
- transmettre au serveur un couple d'identifiants de plage horaire ID_PH et de patient id_CL avec la requête de validation de réservation de l'étape 33 de la figure 3.

Dans cette variante, on évite avantageusement d'imposer au professionnel de santé d'écrire manuellement le nom et/ou les références de son patient sur l'agenda 12.

En se référant à nouveau à la figure 3, si, en revanche, au test 36, le serveur 10, en consultant la base de données des rendez-vous DB1, constate un état "*déjà réservée*" pour la plage horaire PH sélectionnée par le professionnel de santé (flèche "ko" issue du test 36), un message avertit le professionnel de santé de l'indisponibilité de la plage sélectionnée. A cet effet, le stylographe et/ou l'agenda papier peuvent comporter des moyens de signalisation d'un état réservé d'une plage horaire identifiée auprès du serveur. Ce message d'avertissement peut être émis à partir du stylographe 13 et il peut s'agir simplement d'un message sonore tel qu'un bip, ou encore une vibration du stylographe. Toutefois, dans une réalisation plus sophistiquée, à partir de l'identifiant id_CL du patient qui a réservé cette plage horaire au préalable (ici par les moyens de communication 11 et/ou 16 décrits ci-avant), le serveur 10 retrouve les références de ce patient dans la base de données DB2 du carnet d'adresses (étape 37). Le serveur peut alors communiquer au stylographe 13 un signal d'indisponibilité de cette plage horaire choisie, avec les références du patient qui a déjà réservé cette plage (étape 38). Par exemple, dès réception de ce signal, le stylographe 13 peut afficher sur l'écran 132 un message d'indisponibilité de la plage horaire, en indiquant avantageusement les références du patient qui a déjà réservé, au préalable, cette plage horaire (étape 39). De préférence, ce message d'indisponibilité invite le professionnel de santé à sélectionner une autre plage horaire, rebouclant alors le procédé sur l'étape 31 de sélection d'une nouvelle plage horaire. Ce message peut alors être du type "*MR DUPONT* (d'identifiant id_224 dans l'exemple représenté) *a déjà réservé cette plage horaire. Veuillez sélectionner une nouvelle plage*". De façon générale, on retiendra que le stylographe 13 (ou, en variante, l'agenda 12) comporte des moyens d'affichage, tels que l'écran 132, pour afficher les références d'une entité cliente associée à une plage horaire déjà réservée. Cet affichage est alors actif au moins lorsque le stylographe (ou plus précisément les moyens de reconnaissance qu'il comporte) reçoit (reçoivent) du serveur l'information relative à l'état réservé de la plage horaire. On indique en outre que la base de données des rendez-vous DB1 peut aussi inclure une rubrique "*commentaires*" qui, par exemple, peut préciser le type de pathologie pour lequel un patient a pris rendez-vous en ligne, ce patient pouvant, de préférence, être identifié grâce à la base des patients DB2. Dans ce cas, la pathologie peut s'afficher aussi sur l'écran du stylographe 13, avec les références du patient.

La lecture par les moyens de reconnaissance 131 de chaque plage horaire de l'agenda 12 peut déclencher l'émission d'un identifiant unique de plage horaire que le serveur 10 peut interpréter. On décrit ci-après des exemples de moyens de reconnaissance d'une plage horaire quelconque de l'agenda 12, en référence aux figures 2A, 2B et 2C.

Selon un premier mode de réalisation représenté sur la Figure 2A, on prévoit une trame TR1, TR2 par tranche de plage horaire (9h, 9h20, etc.) et par date de jour (samedi SA - 23 octobre 2004, par exemple). Ainsi, à chaque plage horaire de l'agenda 12 correspond un motif de trame TR1. Ces trames peuvent être des motifs sur-imprimés, ou encore des motifs de texture du papier même, pour chaque plage horaire. Les moyens de reconnaissance du stylographe 13 reconnaissent alors chaque plage de l'agenda par lecture optique du motif de trame associé. Ce type de technique est commercialisé par la Société ANOTO™.

Néanmoins, une variante préférée actuellement par la Demanderesse consiste à associer une couleur différente à chaque trame de l'agenda. Ainsi, en référence à la figure 2B, une palette de couleurs CO1 CO2, est prévue pour l'ensemble des plages de l'agenda. Actuellement, environ soixante-cinq mille couleurs peuvent être reconnues par moyens informatiques mettant en oeuvre une lecture optique de couleurs, ce qui offre largement la possibilité de prévoir des tranches horaires de 15 minutes par exemple, par jour, pour tous les jours de l'année. Néanmoins, on notera que l'usage de couleurs sombres peut être proscrit pour la lisibilité de l'agenda par le professionnel de santé. Par exemple, on pourra alors prévoir l'affectation des mêmes couleurs de plages horaires, tous les six mois (ou tous les trois mois) de l'année, en particulier si le professionnel de santé n'accorde pas de rendez-vous au-delà de six mois (trois mois) à compter d'une date en cours.

On indique qu'une variante encore de ces modes de réalisation consisterait, de façon générale, à prévoir un réseau de chemins d'ondes dont la propagation est susceptible d'être perturbée par l'application du stylographe, les chemins de ce réseau d'ondes étant en correspondance locale biunivoque avec des plages horaires de l'agenda. Ces ondes peuvent être ultrasonores ou optiques (typiquement dans l'infrarouge) avec des transducteurs d'émission et de réception de positions bien prédéterminées, ou encore des ondes électriques se propageant dans une trame de tissu conducteur (par exemple des fibres carbonées). Une perturbation locale de ces ondes, par l'application du stylographe, est détectée par l'un des transducteurs récepteurs et, relativement à la position de ce transducteur récepteur, un microcontrôleur détermine ensuite la position et, de là, l'identifiant de la plage horaire sélectionnée.

Plus généralement, la présente invention ne se limite pas aux formes de réalisation décrites ci-avant à titre d'exemple ; elle s'étend toutefois à d'autres variantes.

Ainsi, on comprendra que les moyens d'affichage tels que l'écran 132 peuvent être prévus aussi bien sur le stylographe que sur l'agenda. De façon générale, on considère que l'ensemble stylographe/agenda forme une entité unique munie de moyens de reconnaissance des plages horaires, aptes à communiquer avec le serveur.

On a décrit ci-avant, en référence à la figure 1, des moyens de communication 151 du serveur avec le stylographe par une liaison radiofréquence. Une variante qui sera vraisemblablement préférée consiste à prévoir cette liaison radiofréquence entre le stylographe et un élément de communication, tel qu'un modem, un PDA (pour "*Personnal Digital Assistant*"), un téléphone mobile relié à un réseau cellulaire, ou autre, cet élément de communication étant lui-même connecté au serveur pour l'échange des données au sens de l'invention (par exemple par liaison RTC/IP, GPS/GPRS, ou autre).

Par ailleurs, le serveur peut recevoir les données de réservations des entités clientes via des médias de communication quelconques (un réseau local LAN par exemple), le cas échant par l'intermédiaire d'un poste de secrétariat.

## Revendications

1. Système de prise de rendez-vous destiné à une entité fournisseur, comprenant :
- un agenda papier (12), à disposition de l'entité fournisseur, comportant un calendrier découpé en une pluralité de plages horaires,
- un stylographe (13), à disposition de l'entité fournisseur, agencé pour coopérer avec l'agenda papier et mettant en oeuvre, avec ledit agenda, des moyens de reconnaissance de chaque plage horaire de l'agenda,
**caractérisé en ce qu'**il comporte en outre un serveur (10) de gestion des rendez-vous de l'entité fournisseur, équipé d'une mémoire pour enregistrer des réservations de plages horaires effectuées par des entités clientes distantes, et **en ce que** lesdits moyens de reconnaissance sont agencés pour communiquer avec le serveur et :
- par action du stylographe sur une plage horaire sélectionnée par l'entité fournisseur, reconnaître la plage horaire sélectionnée,
- communiquer au serveur un identifiant associé à la plage horaire reconnue, et
- recevoir du serveur une information relative à un état libre ou réservé de la plage identifiée.

2. Système selon la revendication 1, **caractérisé en ce qu'**il comporte un module de reconnaissance de caractères écrits, et **en ce que** les moyens de reconnaissance sont agencés pour communiquer au serveur des données d'informations écrites ("*MR X*") en correspondance d'une plage horaire sélectionnée (ID_PH).

3. Système selon la revendication 2, **caractérisé en ce que** le serveur est agencé pour :
- faire passer la plage horaire sélectionnée d'un état libre à un état réservé, sur réception desdites données d'informations écrites,
- et enregistrer au moins un identifiant (id_CL) desdites données d'informations écrites dans ladite mémoire, en correspondance de la plage horaire enregistrée à l'état réservé.

4. Système selon l'une des revendications 2 et 3, **caractérisé en ce que** le module de reconnaissance de caractères écrits est agencé pour reconnaître le tracé d'un trait continu, de préférence sensiblement oblique, dans une plage horaire (124) de l'agenda papier, en tant qu'annulation de réservation de ladite plage horaire, tandis que le serveur est agencé pour faire passer ladite plage horaire d'un état réservé à un état libre.

5. Système selon l'une des revendications précédentes, **caractérisé en ce que** le stylographe et/ou l'agenda papier comportent des moyens de signalisation (132) à l'entité fournisseur d'un état réservé d'une plage horaire identifiée auprès du serveur.

6. Système selon la revendication 5, **caractérisé en ce qu'**il comporte une mémoire stockant une base de données (DB2) comprenant des références d'entités clientes en correspondance d'identifiants respectifs,
**en ce que** le serveur stocke, en correspondance de l'état réservé d'une plage horaire par une entité cliente, l'identifiant de ladite entité cliente (id_CL), et est agencé pour communiquer l'identifiant ou les références de l'entité cliente avec l'information relative à l'état réservé de la plage horaire,
et **en ce que** le stylographe et/ou l'agenda papier comportent des moyens d'affichage (132) des références de l'entité cliente associée à la plage horaire réservée, actifs au moins lorsque lesdits moyens de reconnaissance reçoivent du serveur ladite information relative à l'état réservé de la plage horaire.

7. Système selon l'une des revendications précédentes, **caractérisé en ce qu'**il comporte un répondeur intelligent (11) agencé pour communiquer au serveur des données de réservation de plages horaires, relevées de préférence par reconnaissance vocale ou tonale auprès des entités clientes au cours d'une communication téléphonique.

8. Système selon l'une des revendications 1 à 6, **caractérisé en ce que** le serveur est relié à un réseau étendu (16), de préférence de type Internet, pour recevoir des données de réservation de plages horaires effectuées par les entités clientes, via ledit réseau étendu.

9. Serveur de gestion des rendez-vous d'une entité fournisseur, le serveur étant apte à communiquer avec un stylographe (13), à disposition de l'entité fournisseur, conçu pour coopérer avec un agenda papier comportant une pluralité de plages horaires et pour mettre en oeuvre des moyens de reconnaissance d'au moins une plage horaire de l'agenda,
le serveur étant équipé d'une mémoire pour enregistrer des réservations de plages horaires effectuées par des entités clientes distantes, et étant apte à
- recevoir du stylographe, suite à l'action du stylographe sur une plage horaire sélectionnée par l'entité fournisseur, un identifiant associé à la plage horaire reconnue, et
- mettre en oeuvre un dialogue avec ledit stylographe en vue de la réservation de la plage horaire sélectionnée, dialogue pendant lequel il envoie au stylographe une information relative à un état libre ou réservé de la plage identifiée.

10. Serveur selon la revendication 9, **caractérisé en ce que** il est apte à bloquer les réservations en provenance des entités clientes distantes suite à la réception dudit identifiant et pendant le déroulement dudit dialogue.

11. Ensemble comportant un agenda papier (12) et un stylographe (13) d'un système selon l'une des revendications 1 à 8, **caractérisé en ce qu'**il comporte des moyens de reconnaissance de chaque plage horaire de l'agenda, actifs au moins par application du stylographe sur une plage horaire sélectionnée de l'agenda, pour reconnaître la plage horaire sélectionnée et former un signal de communication d'un identifiant unique associé à la plage horaire reconnue.

12. Ensemble selon la revendication 11, **caractérisé en ce que** l'agenda comporte une couleur de papier différente (CO1, CO2) pour chaque plage horaire, tandis que le stylographe comporte, en tant que moyens de reconnaissance, des moyens de lecture optique et de reconnaissance de couleurs associées chacune à une plage horaire différente.

13. Procédé de consultation des prises de rendez-vous effectuées par des entités clientes distantes, mené à partir d'un agenda papier et d'un stylographe mettant en oeuvre, avec ledit agenda, des moyens de reconnaissance de chaque plage horaire de l'agenda, dans lequel, par application d'une pointe du stylographe sur une plage horaire sélectionnée de l'agenda papier, lesdits moyens de reconnaissance sont rendus actifs pour :
- reconnaître la plage horaire sélectionnée (32),
- établir une communication avec un serveur de gestion des rendez-vous de l'entité fournisseur, équipé d'une mémoire pour enregistrer des réservations de plages horaires effectuées au préalable par des entités clientes distantes,
- communiquer au serveur un identifiant (ID_PH) associé à la plage horaire reconnue (33), et
- recevoir du serveur une information relative à un état libre ou réservé de la plage identifiée (36).
